# FASCICULE DE BREVET EUROPEEN

(11) **EP 3 969 413 B1**
(45) Date de publication et mention de la délivrance du brevet: **14.08.2024**
(21) Numéro de dépôt: 20740709.9
(22) Date de dépôt: 12.05.2020
(51) Int. Cl.: C01B 21/16, C07C 45/42

(54) **PROCEDE AMELIORE DE PREPARATION D'HYDRATE D'HYDRAZINE AVEC RECYCLAGE OXIME**
VERBESSERTES VERFAHREN ZUR HERSTELLUNG VON HYDRAZINHYDRAT MIT OXIM-RECYCLING
IMPROVED PROCESS FOR PREPARING HYDRAZINE HYDRATE WITH OXIME RECYCLING

(30) Priorité: 16.05.2019 FR 1905109
(43) Date de publication de la demande: 23.03.2022
(73) Titulaire: ARKEMA FRANCE, 92700 Colombes (FR)
(72) Inventeur: SAGE, Jean-Marc, 69491 PIERRE-BENITE CEDEX (FR)
(74) Mandataire: Arkema Patent
(86) Numéro de dépôt international: PCT/FR2020/050788
(87) Numéro de publication internationale: WO 2020/229773

(56) Documents cités:
- EP-A1- 0 179 699
- DE-T2- 69 905 880
- US-A- 4 963 232

## Description

La présente invention concerne un procédé de préparation d'hydrate d'hydrazine. La présente invention concerne plus précisément un procédé amélioré de préparation d'hydrate d'hydrazine à partir de l'azine de la méthyl éthyl cétone obtenue en présence de méthyl éthyl cétone par oxydation de l'ammoniac par l'eau oxygénée et d'un activateur.

L'hydrazine est utilisée dans diverses applications, principalement dans la désoxygénation des eaux de chaudières (par exemple des centrales nucléaires) et sert à la préparation de dérivés pharmaceutiques et agrochimiques.

Il existe donc un besoin industriel pour la préparation d'hydrate d'hydrazine.

La production industrielle d'hydrate d'hydrazine se fait selon les procédés RASCHIG, BAYER ou à l'eau oxygénée.

Dans le procédé RASCHIG, on oxyde l'ammoniac par un hypochlorite pour obtenir une solution diluée d'hydrate d'hydrazine qu'il faut ensuite concentrer par distillation. Ce procédé peu sélectif, peu productif et très polluant, n'est presque plus utilisé.

Le procédé BAYER est une variante du procédé RASCHIG qui consiste à déplacer un équilibre chimique en piégeant, à l'aide d'acétone, l'hydrazine formée sous forme d'azine de formule suivante : (CH₃)₂C = N-N = C-(CH₃)₂.

L'azine est ensuite isolée puis hydrolysée en hydrate d'hydrazine. Les rendements sont améliorés, mais il n'y a pas d'amélioration quant aux rejets dans l'environnement.

Le procédé à l'eau oxygénée consiste à oxyder un mélange d'ammoniac et d'une cétone par l'eau oxygénée en présence d'un moyen d'activation de l'eau oxygénée pour faire directement l'azine qu'il suffit ensuite d'hydrolyser en hydrate d'hydrazine. Les rendements sont élevés et le procédé n'est pas polluant. Ce procédé à l'eau oxygénée est décrit dans de nombreux brevets, par exemple US 3 972 878, US 3 972 876, US 3 948 902 et US 4 093 656.

L'hydrolyse d'une azine en hydrate d'hydrazine est décrite dans les brevets US 4 724 133 SCHIRMANN et al., US 4 725 421 SCHIRMANN et al. et GB 1 164 460. Cette hydrolyse s'effectue dans une colonne de distillation que l'on alimente avec de l'eau et de l'azine. En tête on récupère la cétone et en pied une solution concentrée d'hydrate d'hydrazine.

Ces procédés sont aussi décrits dans ULLMANN'S ENCYCLOPEDIA OF INDUSTRIAL CHEMISTRY (1989), vol A 13, pages 182-183 et les références incluses.

Dans les procédés à l'eau oxygénée, on oxyde l'ammoniac par le peroxyde d'hydrogène en présence d'une cétone et d'un moyen d'activation du peroxyde d'hydrogène selon la réaction globale suivante, en faisant une azine :

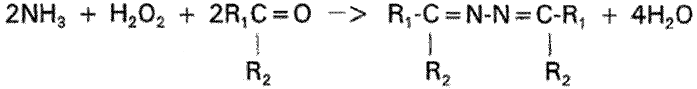

Le moyen d'activation ou activateur peut être un nitrile, un amide, un acide carboxylique ou encore un dérivé du sélénium, de l'antimoine ou de l'arsenic. Puis l'azine est hydrolysée en hydrazine et la cétone est régénérée selon la réaction suivante :

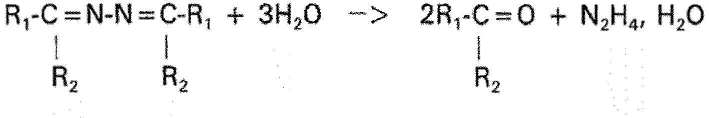

Cette hydrolyse est effectuée en réalité en deux temps, avec formation d'une hydrazone intermédiaire :

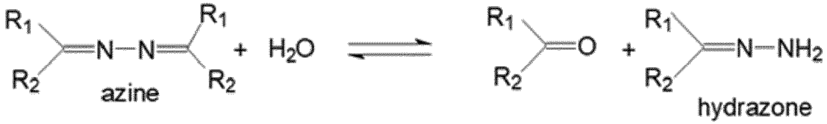

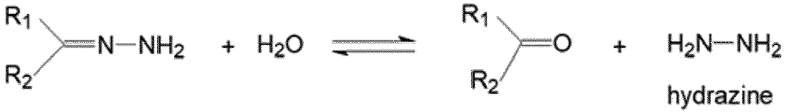

Que l'azine soit produite par un procédé à l'eau oxygénée ou un autre procédé, on utilise avantageusement la méthyl éthyl cétone parce qu'elle est peu soluble dans un milieu aqueux.

En effet, dans le procédé à l'eau oxygénée, l'azine de la méthyl éthyl cétone est relativement insoluble dans le milieu réactionnel qui est forcément aqueux puisque l'on utilise des solutions aqueuses commerciales de peroxyde d'hydrogène titrant entre 30 et 70 % en poids. Cette azine est donc facilement récupérable et séparable par simple décantation. Elle est très stable surtout en milieu alcalin, c'est-à-dire dans le milieu réactionnel ammoniacal. Dans les procédés actuels, cette azine est ensuite purifiée, puis hydrolysée dans une colonne de distillation réactive pour libérer *in fine* de la méthyl éthyl cétone en tête à recycler, et surtout une solution aqueuse d'hydrate d'hydrazine en pied, qui doit contenir aussi peu de produits carbonés que possible comme impuretés et doit être incolore.

Toutefois, dans ces procédés à l'eau oxygénée et utilisant la méthyl éthyl cétone (également appelée MEK), il se forme de faibles quantités d'un sous-produit, l'oxime de la méthyl éthyl cétone (ou oxime de la MEK) dont la présence perturbe le bon fonctionnement du procédé.

L'oxime de la MEK est de formule suivante :

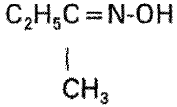

L'oxime de la MEK est formée principalement en amont de l'étape d'hydrolyse lors des étapes de synthèse de l'azine et de l'éventuel traitement de la phase aqueuse en sortie de l'étape de synthèse. Ce sous-produit peut s'accumuler sur les plateaux de la colonne d'hydrolyse et provoquer des problèmes de conduite de la colonne, ainsi que des décompositions de l'hydrazine de par son accumulation au-delà d'une certaine concentration. De préférence, la teneur en oxime de la méthyl éthyl cétone est inférieure ou égale à 20 % en poids, plus préférentiellement comprise entre 5% et 13% en poids, par rapport au poids total de la phase liquide sur les plateaux de la colonne ou dans les parties de la colonne où sa concentration est à son maximum.

Malheureusement, l'oxime de la MEK est difficilement séparable par distillation de l'azine qui est le produit majoritaire, si bien que, dans les procédés industriels, elles sont envoyées simultanément dans l'équipement qui permet d'hydrolyser l'azine en hydrate d'hydrazine. Lorsqu'on procède à cette hydrolyse dans une colonne à distiller, par exemple une colonne réactive à plateaux, l'oxime se concentre à certains endroits de la colonne (par exemple sur certains plateaux). On observe aussi une décomposition anormale de l'hydrate d'hydrazine, entraînant des baisses de rendement importantes. Le document DE 699 05 880 T2 décrit un procédé de préparation d'hydrate d'hydrazine, dans lequel une purge de l'oxime de la méthyl éthyl cétone est effectuée lors de l'hydrolyse de l'azine. Cependant, ce document ne décrit pas de traitement particulier de cette purge.

Il existe donc un besoin pour un procédé industriel de préparation d'hydrate d'hydrazine amélioré quant au traitement des sous-produits tels que les oximes, en particulier l'oxime de la MEK.

Le document WO 99/58446 décrit la purge de l'oxime de la méthyl éthyl cétone lors de l'étape d'hydrolyse de l'azine en hydrate d'hydrazine. Il est mentionné que l'azine obtenue après séparation d'avec la phase aqueuse est accompagnée de méthyl éthyl cétone n'ayant pas réagi et de différents sous-produits dont l'oxime de la MEK. Toutefois, ce document ne donne aucune indication quant à un éventuel traitement de cette purge.

Il existe donc un besoin pour un procédé amélioré de préparation d'hydrate d'hydrazine dans lequel les sous-produits sont traités de façon plus économique et plus respectueuse de l'environnement.

De façon surprenante, le présent inventeur a découvert que lorsque l'on recycle la purge d'oxime de la MEK en amont de l'étape d'hydrolyse, il s'établit un régime d'équilibre et la teneur en oxime se stabilise dans le procédé, ce qui permet d'opérer la colonne d'hydrolyse de façon satisfaisante.

En effet, il a été découvert qu'une partie de l'oxime recyclée est consommée dans les conditions de l'hydrolyse, ce qui permet d'atteindre une stabilisation de la concentration en oxime dans le procédé et non une augmentation contrairement à ce qui pouvait être attendu.

Le recyclage de la purge d'oxime selon l'invention présente de nombreux avantages. On évite ainsi de rejeter un effluent contenant de l'azine et de l'hydrazone qui représentent des produits intermédiaires conduisant à l'hydrazine, tout en éliminant le sous-produit oxime du procédé, sans ajouter d'opérations ou surcoût supplémentaire au procédé.

Si l'effluent contenant l'oxime était rejeté, il serait nécessaire mettre en oeuvre un traitement supplémentaire, comme par exemple une incinération ou un traitement d'oxydation avant son rejet dans l'environnement.

Le procédé tel que selon l'invention permet également de ne pas perdre les composés hydrazone et azine qui peuvent être contenus dans la purge d'oxime car l'hydrazone et l'azine conduisent par hydrolyse à l'hydrate d'hydrazine. Il permet également d'éliminer l'oxime formée sans rajouter d'opération unitaire complexe dans le procédé. Il est notamment entendu par azine, l'azine de la méthyl éthyl cétone encore appelée mecazine.

Ainsi, la présente invention concerne un procédé de préparation d'hydrate d'hydrazine comprenant les étapes suivantes :
- on fait réagir l'ammoniac, le peroxyde d'hydrogène et la méthyl éthyl cétone en présence d'une solution comprenant au moins un activateur pour former une azine (et éventuellement l'oxime de la méthyl éthyl cétone) ;
- on hydrolyse l'azine de la méthyl éthyl cétone formée pour obtenir de l'hydrate d'hydrazine tout en effectuant une purge de l'oxime de la méthyl éthyl cétone lors de ladite étape d'hydrolyse ;
ledit procédé étant caractérisé en ce que ladite purge d'oxime de la méthyl éthyl cétone est recyclée en amont de l'étape d'hydrolyse.

Il est entendu que lors de la formation de l'azine, le sous-produit oxime de la méthyl éthyl cétone est également formé.

Plus particulièrement, la présente invention concerne un procédé de préparation d'hydrate d'hydrazine comprenant les étapes suivantes :
(a) on fait réagir l'ammoniac, le peroxyde d'hydrogène et la méthyl éthyl cétone en présence d'une solution comprenant au moins un activateur pour former une azine ;
(b) on sépare à partir du mélange réactionnel issu de l'étape (a) :
   - la phase aqueuse comprenant ledit au moins un activateur ; et
   - la phase organique comprenant l'azine et l'oxime de la méthyl éthyl cétone formées et éventuellement la méthyl éthyl cétone n'ayant pas réagi ;
(c) éventuellement on recycle à l'étape (a) la phase aqueuse après un traitement éventuel;
(d) on lave, de préférence à contre-courant, la phase organique ;
(e) éventuellement on distille la phase organique lavée de façon à récupérer l'azine ;
(f) on hydrolyse l'azine pour obtenir de l'hydrate d'hydrazine et régénérer la méthyl éthyl cétone, tout en effectuant une purge de l'oxime de la méthyl éthyl cétone ;
(g) éventuellement on recycle à l'étape (a) la méthyl éthyl cétone obtenue à l'étape (f) ;
(h) on recycle la purge de l'oxime de la méthyl éthyl cétone obtenue à l'étape (f) à l'une au moins des étapes (a), (b), (c), (d) ou (g).

Selon l'invention, le recyclage de la purge de l'oxime de la MEK est effectué en amont de l'étape d'hydrolyse (f). La purge de l'oxime comprend l'oxime de la MEK, mais peut également comprendre de l'azine, de l'hydrazone et de l'eau. Ladite purge est notamment sous forme aqueuse.

De préférence, l'ensemble des étapes du procédé sont réalisées en continu.

### Etape (a) : Formation de l'azine de la méthyl éthyl cétone

Dans l'étape (a), on fait réagir l'ammoniac, le peroxyde d'hydrogène et la méthyl éthyl cétone en présence d'une solution comprenant au moins un activateur pour former une azine, c'est-à-dire l'azine de la méthyl éthyl cétone.

L'ammoniac peut être anhydre ou en solution aqueuse.

L'eau oxygénée peut être utilisée sous sa forme commerciale habituelle, par exemple en solution aqueuse entre 30 % et 90 % en poids d'H₂O₂. Avantageusement, on peut ajouter un ou plusieurs stabilisants usuels des solutions peroxydiques, par exemple de l'acide phosphorique, pyrophosphorique, citrique, nitrilo-triacétique, éthylènediaminetétracétique ou les sels d'ammonium ou de métal alcalin de ces acides. La quantité à utiliser est avantageusement comprise entre 10 et 1000 ppm et, de préférence, entre 50 et 250 ppm de l'ensemble des réactifs et de la solution comprenant au moins un activateur à l'entrée du réacteur.

Par « activateur », on entend un composé permettant d'activer l'eau oxygénée, c'est-à-dire un composé tel que l'on puisse produire de l'azine à partir d'ammoniac, d'eau oxygénée et de méthyl éthyl cétone.

Cet activateur peut être choisi parmi les oxyacides organiques ou inorganiques, leurs sels d'ammonium et leurs dérivés : anhydrides, esters, amides, nitriles, peroxydes d'acyle, ou leurs mélanges. Avantageusement, on utilise les amides, les sels d'ammonium et les nitriles.

A titre d'exemple, on peut citer :
(i} des amides d'acides carboxyliques de formule R₅COOH dans laquelle R₅ est l'hydrogène, un radical alkyle linéaire ayant de 1 à 20 atomes de carbone, ou un radical alkyle ramifié ou cyclique ayant de 3 à 12 atomes de carbone, ou un radical phényle pouvant être substitué,
(ii} des amides d'acides polycarboxyliques de formule R₆(COOH)ₙ dans laquelle R₆ représente un radical alkylène ayant de 1 à 10 atomes de carbone et n étant un nombre entier supérieur ou égal à 2, R₆ peut être une simple liaison, alors n vaut 2.

Les radicaux R₅ et R₆ peuvent être substitués par des halogènes, des groupements OH, NO₂ ou méthoxy. On peut citer aussi les amides des acides organiques de l'arsenic. Les acides organiques de l'arsenic sont, par exemple, l'acide méthylarsonic, l'acide phénylarsonic et l'acide cacodylique.

Les amides préférés sont le formamide, l'acétamide, le monochloracétamide et le propionamide, et plus préférentiellement l'acétamide.

Parmi les sels d'ammonium, on utilise avantageusement les sels d'hydracides, d'oxyacides minéraux, d'acides arylsulfoniques, d'acides de formules R₅COOH ou R₆(COOH)ₙ, R₅, R₆ et n étant définis précédemment, des acides organiques de l'arsenic. Les sels d'ammonium préférés sont le formiate, l'acétate, le monochloracétate, le propionate, le phénylarsonate et le cacodylate.

Parmi les nitriles, on peut citer avantageusement les produits de formule R₇(CN)ₙ, n pouvant varier de 1 à 5 selon la valence de R₇, R₇ est un alkyle cyclique ou non cyclique ayant de 1 à 12 atomes de carbone ou un benzyle ou un groupement pyridinyl. R₇ peut être substitué par des groupements qui ne s'oxydent pas dans le réacteur de l'étape (a), par exemple des halogènes, des groupes carboxyliques, esters carboxyliques, nitro, amine, hydroxy ou acide sulfonique.

Les nitriles préférés sont l'acétonitrile et le propionitrile.

On forme la solution comprenant au moins un activateur en mettant en solution un ou plusieurs produits choisis parmi les oxyacides organiques ou inorganiques, leurs sels d'ammonium et leurs dérivés : anhydrides, esters, amides, nitriles, peroxydes d'acyle, ou leurs mélanges tels que définis ci-dessus. Avantageusement, on utilise les amides, les sels d'ammonium ou les nitriles précédents. De façon particulièrement préférée, on utilise un seul activateur, qui est l'acétamide.

Cette solution peut être aqueuse ou à base d'un alcool ou d'un mélange d'alcool et eau. Parmi les alcools, on utilise avantageusement les alcools aliphatiques saturés ayant de 1 à 6 atomes de carbone et, de préférence, 1 à 2 atomes de carbone.

On utilise aussi avantageusement des diols et plus particulièrement des diols ayant de 2 à 5 atomes de carbone. On peut citer par exemple le glycol, le propylèneglycol, le 1,3 propanediol, le 1,3 et 1,4 butanediol et le 1,5 pentanediol.

Selon un mode de réalisation, ladite solution est une solution alcoolique d'un acide organique de l'arsenic et est décrite dans le brevet EP 0 070 155.

Selon un autre mode de réalisation, ladite solution est une solution aqueuse d'un amide d'acide faible et du sel d'ammonium correspondant à cet acide telle que décrite dans le brevet EP 0 487 160.

Ces amides d'acides faibles sont dérivés des acides carboxyliques correspondants qui ont une constante de dissociation inférieure à 3 x 10⁻³, c'est-à-dire les acides qui ont un pK supérieur à 3 en solution aqueuse à 25°C.

Pour les acides polycarboxyliques, ce sont les acides dont la constante de la première ionisation est inférieure à 3 x 10⁻³.

À titre d'exemple, on peut citer les acides carboxyliques de formule R₈COOH dans laquelle R₈ est un radical alkyle linéaire ayant de 1 à 20 atomes de carbone, ou un radical alkyle ramifié ou cyclique ayant de 3 à 12 atomes de carbone, ou un radical phényle pouvant être substitué, des acides polycarboxyliques de formule R₉(COOH)ₙ dans laquelle R₉ représente un radical alkylène ayant de 1 à 10 atomes de carbone et n étant un nombre supérieur ou égal à 2, R₉ peut être une simple liaison alors n vaut 2. Les radicaux R₈ et R₉ peuvent être substitués par des halogènes, des groupements OH, NO₂ ou méthoxy. On utilise de préférence l'acétamide, le propionamide, le n-butyramide ou l'isobutyramide.

Le sel d'ammonium correspondant de l'acétamide est l'acétate d'ammonium.

On ne sortirait pas du cadre de l'invention en formant le sel d'ammonium in situ c'est-à-dire en utilisant l'acide carboxylique correspondant qui donne par réaction avec l'ammoniac le sel d'ammonium.

Les proportions de l'amide et du sel d'ammonium correspondant peuvent varier dans de larges limites. On utilise habituellement de 1 à 25 parties du sel d'ammonium pour 5 parties d'amide et de préférence 2 à 10.

Les réactifs peuvent être utilisés en quantités stoechiométriques. Cependant, on peut utiliser par mole d'eau oxygénée 0,2 à 5 moles et de préférence 1,5 à 4 moles de méthyl éthyl cétone ; de 0,1 à 10 moles et de préférence de 1,5 à 4 moles d'ammoniac. La quantité de solution comprenant au moins un activateur peut être comprise entre 0,1 et 2 kg par mole d'eau oxygénée. Cette quantité dépend de sa qualité, c'est-à-dire de sa force catalytique ou son activité qui permet de convertir les réactifs en azine. Les proportions des réactifs fixées ci-dessus permettent d'obtenir une conversion totale de l'eau oxygénée et une production d'azine correspondant à plus de 50 % de l'eau oxygénée engagée et pouvant atteindre 90 %.

La mise en contact de l'eau oxygénée, de l'ammoniac, de la méthyl éthyl cétone avec la solution comprenant au moins un activateur peut s'effectuer de façon quelconque.

On peut opérer dans un milieu homogène ou dans un milieu qui assure au moins une solubilisation suffisante des réactifs pour pouvoir obtenir de l'azine. La réaction peut se faire dans une très large plage de température, par exemple entre 0°C et 100°C, et on opère avantageusement entre 30°C et 70°C. Bien que l'on puisse opérer à toute pression, il est plus simple d'être à la pression atmosphérique, mais on peut monter jusqu'à environ 10 bars si nécessaire pour maintenir de préférence la réaction de l'étape (a) en phase liquide.

Les réactifs peuvent être introduits simultanément ou séparément et dans un ordre quelconque dans la solution comprenant au moins un activateur.

On peut utiliser toutes sortes de réacteurs, agités ou non agités, ou même de simples capacités qu'on peut disposer en parallèle, en série, à co-courant ou à contre-courant, ou toute combinaison de ces possibilités.

On obtient ainsi, suite à la réaction de l'étape (a), un mélange réactionnel comprenant l'azine et l'oxime de la méthyl éthyl cétone formées, éventuellement la méthyl éthyl cétone n'ayant pas réagi, éventuellement le(s) activateur(s), et éventuellement d'autres sous-produits ou impuretés.

### Etape (b) : Séparation de phases

On sépare la phase aqueuse comprenant le ou les activateur(s) de la phase organique comprenant l'azine et l'oxime de méthyl éthyl cétone formées et éventuellement la méthyl éthyl cétone n'ayant pas réagi par des moyens classiques tels que l'extraction liquide-liquide, la distillation, la décantation ou toute combinaison de ces possibilités. De préférence, on utilise la décantation.

La phase organique obtenue peut comprendre l'azine et l'oxime de la méthyl éthyl cétone formées, de la méthyl éthyl cétone n'ayant pas réagi, de(s) l'activateur(s), et éventuellement d'autres impuretés.

### Etape (c) : Recyclage de la phase aqueuse

Dans l'étape (c), la phase aqueuse peut être traitée avant recyclage à l'étape (a), classiquement par exemple par régénération thermique puis éventuellement concentration.

Les étapes (a), (b) et (c) sont décrites par exemple dans les brevets EP 399 866 et EP 518 728.

### Etape (d) : Lavage de la phase organique

L'étape de lavage de la phase organique obtenue à l'étape (b) est une étape pouvant être réalisée selon des techniques connues de l'homme du métier, comme indiqué par exemple dans le document WO 2018/065997 (p.13, « Organic layer processing section », second paragraphe). L'étape de lavage permet notamment de récupérer le(s) activateur(s), par exemple l'acétamide, qui serai(en)t encore présent(s) dans la phase organique.

Le lavage peut être effectué dans une colonne de lavage à contre-courant.

De préférence, le lavage est effectué à contre-courant par la purge d'oxime effectuée à l'étape (f) d'hydrolyse, éventuellement après ajout d'eau. Le lavage peut être effectué par tout ou partie de la purge d'oxime. Encore plus préférentiellement, la purge est suffisante pour effectuer le lavage, sans ajout d'eau, ce qui permet notamment d'économiser une entrée d'eau supplémentaire dans le procédé.

Par exemple, la purge d'oxime telle que définie ci-dessus est ajoutée en tête de colonne et la phase organique à laver est ajoutée en pied de colonne. Le(s) activateur(s) pouvant encore être contenu(s) dans la phase organique passe(nt) ainsi dans la phase aqueuse de lavage (soit la purge d'oxime).

Selon un mode de réalisation, après passage dans la colonne de lavage, la phase aqueuse résultante est soit recyclée à l'étape (a) avec la phase aqueuse récupérée à l'étape (b), soit encore peut être renvoyée directement dans la colonne d'hydrolyse.

### Etape (e) : Distillation de la phase organique

L'étape de distillation de la phase organique lavée est une étape pouvant être réalisée selon des techniques connues de l'homme du métier, comme indiqué par exemple dans le document WO 2018/065997 (p.13, Organic layer processing section), notamment dans une colonne de distillation.

L'étape de distillation sert notamment à séparer l'azine des impuretés lourdes, à haut point d'ébullition. On récupère ces dernières en pied de colonne par exemple. L'étape de distillation sert également à séparer l'azine formée à l'étape (a) de la méthyl éthyl cétone n'ayant pas réagi, que l'on peut récupérer en tête de colonne. Il est possible de recycler la méthyl éthyl cétone ainsi récupérée à l'étape (a) de synthèse de l'azine. Ainsi, à l'issue des étapes de lavage et de distillation, on obtient une phase organique purifiée, comprenant l'azine et l'oxime de la méthyl éthyl cétone.

### Etape (f) : Hydrolyse de l'azine, régénération de la MEK et purge de l'oxime

### Hydrolyse de l'azine et régénération de la méthyl éthyl cétone

L'étape d'hydrolyse s'effectue de préférence en continu, sous pression, dans une colonne à distiller réactive dans laquelle sont injectées l'eau et la phase organique comprenant l'azine et l'oxime provenant des étapes (d) ou (e).

L'hydrolyse peut être effectuée dans une colonne de distillation à garnissage ou à plateaux, de préférence fonctionnant sous une pression de 2 à 25 bars et avec une température de pied comprise entre 150°C et 200°C.

Bien que des colonnes classiques à garnissage puissent convenir, on utilise en général des colonnes à plateaux. Suivant le temps de séjour admis sur les plateaux et la pression, donc les températures auxquelles on opère, le nombre de plateaux peut varier énormément. Dans la pratique, lorsqu'on opère sous une pression de 8 à 10 bars, le nombre de plateaux nécessaires est de l'ordre de 40 à 50.

Suite à l'hydrolyse, on obtient :
- en tête, la méthyl éthyl cétone notamment sous forme d'un azéotrope avec l'eau, et
- en pied, une solution aqueuse d'hydrate d'hydrazine.

L'hydrolyse des azines est connue. Par exemple, E.C. GILBERT, dans un article dans le Journal of American Chemical Society vol.51, pages 3397-3409 (1929), décrit les réactions équilibrées de formation d'azine et les réactions d'hydrolyse de celle-ci et fournit les paramètres thermodynamiques du système dans le cas d'azines solubles dans l'eau. Par exemple, l'hydrolyse de l'azine de l'acétone est décrite dans US 4 724 133. S'agissant des azines insolubles dans les solutions aqueuses (par exemple l'azine de la méthyl éthyl cétone) l'hydrolyse doit être réalisée dans une colonne réactive, de telle sorte qu'en séparant continuellement la méthyl éthyl cétone en tête de colonne de distillation et l'hydrate d'hydrazine en pied de colonne, on peut parvenir à une hydrolyse totale. Bien entendu ce système est au meilleur de son fonctionnement lorsqu'on travaille en continu comme décrit dans les brevets FR 1 315 348 ou GB 1 211 54 7, ou encore le brevet US 4 725 421.

Dans tous ces brevets, la réaction est réalisée dans une colonne de distillation à garnissage ou mieux à plateaux fonctionnant sous une pression de 2 à 25 bars et avec une température de pied de 150°C à 200°C.

Lorsqu'on travaille avec de l'azine pure, c'est-à-dire obtenue par exemple à partir d'hydrate d'hydrazine et de méthyl éthyl cétone, on constate effectivement en travaillant selon ces brevets, que l'on obtient avec un bon rendement des solutions diluées d'hydrate d'hydrazine.

Dans cette colonne, s'effectuent l'hydrolyse de l'azine et la séparation de l'hydrate d'hydrazine d'avec la méthyl éthyl cétone. Ces conditions sont connues. L'homme du métier détermine facilement le nombre de plateaux ou la hauteur de garnissage, ainsi que les points d'alimentation en azine et en eau. On obtient en pied des solutions à 30 % ou même jusqu'à 45 % en poids d'hydrate d'hydrazine. Par exemple, le rapport molaire eau/azine à l'alimentation de cette colonne est au moins supérieur à la stoechiométrie et avantageusement compris entre 5 et 30, de préférence entre 10 et 20. La température du pied de colonne peut être comprise entre 150°C et 200°C, de préférence entre 175°C et 190°C. La pression est fonction de la température d'ébullition de l'azine, de l'eau et de la cétone. Une telle hydrolyse est également décrite dans US 4 725 421 et dans WO 00/37357.

La réaction de l'étape (a) peut produire une phase organique contenant jusqu'à 5% en poids d'oxime, par rapport au poids total de la phase organique. De préférence, la phase organique produite à l'issue de l'étape a) ou b) comprend entre 0,1% et 5%, par exemple entre 1,5 et 2,5% en poids d'oxime de la méthyl éthyl cétone.

Par exemple, lorsqu'on opère avec l'azine de la méthyl éthyl cétone provenant d'une opération d'oxydation avec l'eau oxygénée selon le brevet EP 70 155 ou encore selon les brevets EP 399 866, EP 518 728 ou EP 487 160, on observe que cette azine n'est pas pure, mais qu'elle contient une quantité d'oxime pouvant varier entre 0,1% et 1 % d'oxime de la méthyl éthyl cétone dont le point d'ébullition est de 151°C à pression atmosphérique à comparer à 161°C pour l'azine de la méthyl éthyl cétone.

### Purge de l'oxime

On effectue selon l'invention la purge de l'oxime de la MEK lors de l'étape (f) d'hydrolyse.

Selon le nombre de plateaux ou la hauteur de garnissage, la position de l'alimentation en azine et la position de l'alimentation en eau, le reflux, la nature de l'azine etc ..., l'homme du métier peut déterminer facilement dans quelle partie de la colonne on obtient la concentration maximum en oxime. Il est en effet plus simple de purger l'oxime par un soutirage à l'endroit où sa concentration est maximum. On peut faire un soutirage en continu, ou en discontinu, de préférence en continu.

La quantité à soutirer peut se déterminer facilement par analyse par chromatographie en phase gazeuse de la concentration en oxime.

Selon le document WO 99/58446, on peut introduire l'azine comprenant de l'oxime dans la colonne d'hydrolyse. Cette oxime du fait de son comportement azéotropique avec l'eau se classe dans la colonne à un niveau intermédiaire entre l'hydrate d'hydrazine et la méthyl éthyl cétone et, de ce fait, on peut assez aisément la séparer par soutirage latéral.

De préférence, la purge de l'oxime de la méthyl éthyl cétone est donc réalisée par soutirage, de préférence par un soutirage latéral en continu.

### Etape (g) : Recyclage de la méthyl éthyl cétone régénérée

On peut recycler à l'étape (a) la méthyl éthyl cétone obtenue à l'étape (f).

### Etape (h) : recyclage de la purge d'oxime

De préférence l'étape (h) de recyclage est réalisée en continu. On peut recycler la purge d'oxime de la méthyl éthyl cétone obtenue à l'étape (f), à l'une au moins des étapes (a), (b), (c), (d) ou (g) du procédé selon l'invention, de préférence à l'une au moins des étapes (c), (d) ou (g). De préférence, on recycle la purge d'oxime de la méthyl éthyl cétone obtenue à l'étape (f), à l'étape (d) de lavage de la phase organique.

Ainsi, la purge d'oxime peut être recyclée :
soit dans la phase aqueuse résultant de l'étape de séparation (b) qui est recyclée à l'étape (a) ;
soit avec la méthyl éthyl cétone récupérée en tête de la colonne d'hydrolyse et qui est recyclée à l'étape (a) ;
soit dans l'étape de lavage (d).

### Description des Figures

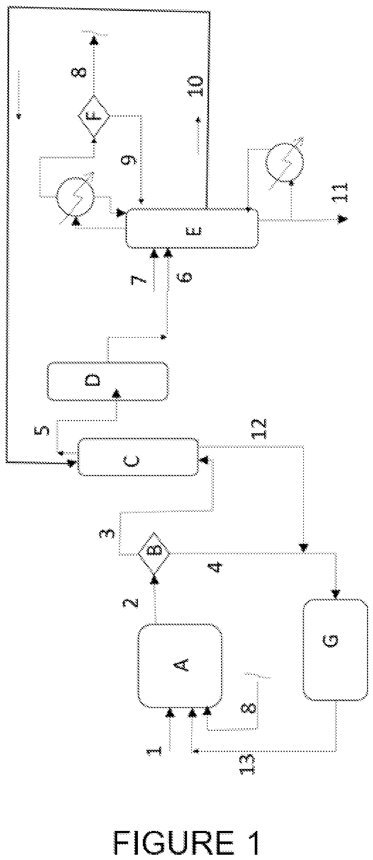

### Figure 1 : Procédé de préparation d'hydrate d'hydrazine selon l'invention

La Figure 1 représente un exemple de mise en oeuvre industrielle du procédé selon l'invention.
**A** représente l'étape (a) de synthèse de la mécazine, le flux 1 comprend de l'ammoniac, de l'eau oxygénée ainsi que des appoints nécessaires en acide acétique, acétate d'ammonium ou acétamide ou encore en méthyl éthyl cétone ainsi que les divers additifs utiles lors de l'étape de synthèse, comme par exemple les stabilisants peroxydes. Le flux 13 correspond au recyclage de la phase aqueuse selon l'étape (c), après sa régénération thermique et concentration pour éliminer l'eau excédentaire. Le flux 8 correspond au recyclage de la Méthyl éthyl cétone régénérée lors de l'étape d'hydrolyse et récupérée en sortie de la colonne d'hydrolyse E selon l'étape (g).
**B** représente un décanteur en sortie de l'étape (a) de synthèse de l'azine qui reçoit le mélange réactionnel 2. Il permet de séparer la phase organique contenant la mecazine brute correspondant au flux 3 et la phase aqueuse contenant l'activateur, par exemple l'acétamide, et correspondant au flux 4 selon l'étape (b).
**C** représente une colonne de lavage à contre-courant selon l'étape (d). La phase organique, flux 3 est introduite en bas de la colonne C et est lavée à contre-courant par le flux 10 correspondant à la purge de méthyl éthyl cétone oxime extraite des plateaux de la colonne d'hydrolyse de l'azine, **E** selon l'étape (h). Le flux 12, correspondant à la phase aqueuse en sortie de la colonne de lavage C est ensuite renvoyé en section **G** correspondant à l'étape de régénération thermique et concentration de la phase aqueuse avec le flux 4.

La phase organique lavée, flux 5, est envoyée en purification sur une colonne de distillation **D** selon l'étape (e). Cette colonne permet de récupérer en tête un peu de méthyl éthyle cétone recyclée en A et permet d'éliminer en pieds les impuretés lourdes présentes dans l'azine (non représenté).

La phase organique comprenant l'azine distillée, flux 6, est envoyée ensuite dans la colonne d'hydrolyse **E.** La colonne d'hydrolyse E est une colonne à distiller fonctionnant sous pression. L'azine distillée, 6, est introduite dans la colonne E ainsi que de l'eau, flux 7, nécessaire à l'hydrolyse.

Après l'étape d'hydrolyse (f), en tête, après condensation des vapeurs et décantation en F, on obtient le flux 8, comprenant principalement la méthyl éthyl cétone, de l'eau et un peu d'azine. Cette phase est recyclée à l'étape de synthèse de l'azine A.

La phase aqueuse décantée, flux 9, est renvoyée dans la colonne d'hydrolyse en tête. Le flux 11 correspond à la solution d'hydrate d'hydrazine obtenue et récupérée en pied de colonne.

Les exemples sont donnés à titre purement illustratif et ne sont pas limitatifs de l'invention.

### EXEMPLES

### Exemple 1 : Procédé de préparation selon l'invention

Le procédé tel que décrit pour la Figure 1 est mis en oeuvre.

La colonne E fonctionne dans les conditions décrites ci-après :

| | |
|---|---|
| Température en fond | 178-190°C |
| Température du condenseur en tête | 160°C |
| Pression de tête | 7,5 à 9,7 bars absolus |
| Rebouillage | Température 200°C, Pression 16 bars |
| Alimentation en azine distillée 6 | 5000 kg/heure |
| Alimentation en eau 7 | 10000 kg/heure |

Soutirage d'hydrazine en pied 12 t/h d'une solution aqueuse à 22,2% exprimé en hydrate d'hydrazine (ou 14,2% exprimé en hydrazine N₂H₄)

Après l'étape d'hydrolyse (f), en tête, après condensation des vapeurs et décantation, on soutire environ 6 500 kg/heures de phase organique, flux 8, comprenant principalement la méthyl éthyl cétone, de l'eau et un peu d'azine. Cette phase est recyclée à l'étape de synthèse de l'azine A.

La phase aqueuse décantée, flux 9, est renvoyée dans la colonne d'hydrolyse en tête.

Une purge, flux 10 est effectuée sur les plateaux de la colonne d'hydrolyse à un débit de 1477 kg/h, à l'endroit où l'oxime de la méthyl éthyl cétone s'accumule. Cette purge est renvoyée dans la colonne de lavage C pour laver la phase organique issue du séparateur B.

Le relevé des débits et analyses effectuées autour de la colonne de lavage C sont reportés dans le tableau 1 :

| Tableau 1 | colonne de lavage C de l'azine brute | | | | | | |
|---|---|---|---|---|---|---|---|
| | phase organique | | | | phase aqueuse | | |
| | entrée | sortie | gain | | entrée | sortie | gain |
| flux n° | 3 | 5 | 5 - 3 | | 10 | 12 | 12 - 10 |
| | kg/h | kg/h | kg/h | | kg/h | kg/h | kg/h |
| MEC | 315 | 370 | | | 0.3 | 18 | |
| MEC-azine | 5416 | 5565 | 150 | | 75 | 38 | -37 |
| MEC-hydrazone | 0 | 0 | | | 89 | 2 | -88 |
| MEC-Oxime | 154 | 318 | 164 | | 171 | 3 | -168 |
| Acétamide | 46 | 0 | | | 0 | 49 | |
| EAU | 49 | 318 | | | 1137 | 777 | |
| flux total | 7006 | 7401 | | | 1477 | 892 | |

On voit que 150kg/h d'azine sont ainsi récupérés en phase organique (flux 5) lors du lavage du flux 3 par la purge d'oxime 10. Aux incertitudes d'analyses près ceci correspond à la récupération de 37 et 88 kg d'azine et d'hydrazone contenus dans cette purge 10. L'oxime contenue dans la purge 10 est transférée de façon quasiment quantitative également dans le flux d'azine 5 en sortie de la colonne de lavage.

Le bilan est également effectué autour de la colonne d'hydrolyse E et est reporté dans le tableau 2 :

| | | colonne d'hydrolyse E | | | | |
|---|---|---|---|---|---|---|
| | azine lavée | azine lavée distillée | purge oxime | MEC recyclée | EAU | Hydrate d'hydrazine |
| flux n° | 5 | 6 | 10 | 8 | 7 | 11 |
| | kg/h | kg/h | kg/h | kg/h | kg/h | kg/h |
| MEC | 370 | 21 | 0.3 | 5206 | | 0 |
| MEC-azine | 5565 | 5523 | 75 | 404 | | 0 |
| MEC-hydrazone | 0 | 0 | 89 | 0 | | 6 |
| MEC-Oxime | 318 | 283 | 171 | 0 | 0 | 0 |
| Acétamide | 0 | 0 | 0 | 0 | | 0 |
| EAU | 318 | 21 | 1137 | 849 | 11000 | 7768 |
| N2H4 hydrazine | 0 | 0 | 0 | 0 | 0 | 1305 |
| impuretés div QSP | 829 | 139 | 4 | 330 | 0 | 106 |
| flux total | 7401 | 5987 | 1477 | 6789 | 11000 | 9186 |

On voit que l'oxime est consommée principalement lors de l'hydrolyse de l'azine dans la colonne E lorsque l'on opère le procédé selon l'invention en recyclant la purge 10.

Le flux 3 (tableau 1) représente 154kg/h d'oxime produit en amont de l'hydrolyse par l'étape de synthèse de l'azine A et de régénération thermique de la phase aqueuse G. Cette production est bien compensée par la perte d'oxime observée entre l'étape de lavage C et l'hydrolyse E, donc entre le flux 5 (318kg/h d'oxime) et le flux 10 recyclant l'oxime à 171 kg/h, soit une consommation de 318-171, 147 kg/h d'oxime.

On observe que l'oxime n'augmente pas dans le procédé et reste à une concentration de 11% sur les plateaux de la colonne d'hydrolyse E.

## Revendications

1. Procédé de préparation d'hydrate d'hydrazine comprenant les étapes suivantes :
- on fait réagir l'ammoniac, le peroxyde d'hydrogène et la méthyl éthyl cétone en présence d'une solution comprenant au moins un activateur pour former une azine ;
- on hydrolyse l'azine de la méthyl éthyl cétone formée pour obtenir de l'hydrate d'hydrazine tout en effectuant une purge de l'oxime de la méthyl éthyl cétone lors de ladite étape d'hydrolyse ;
ledit procédé étant **caractérisé en ce que** ladite purge d'oxime de la méthyl éthyl cétone est recyclée en amont de l'étape d'hydrolyse.

2. Procédé de préparation d'hydrate d'hydrazine selon la revendication 1, comprenant les étapes suivantes :
(a) on fait réagir l'ammoniac, le peroxyde d'hydrogène et la méthyl éthyl cétone en présence d'une solution comprenant au moins un activateur pour former une azine ;
(b) on sépare à partir du mélange réactionnel issu de l'étape (a) :
- la phase aqueuse comprenant le(s) activateur(s) ; et
- la phase organique comprenant l'azine et l'oxime de la méthyl éthyl cétone formées et éventuellement la méthyl éthyl cétone n'ayant pas réagi ;
(c) éventuellement on recycle à l'étape (a) la phase aqueuse après un traitement éventuel ;
(d) on lave, de préférence à contre-courant, la phase organique ;
(e) éventuellement on distille la phase organique lavée de façon à récupérer l'azine ;
(f) on hydrolyse l'azine pour obtenir de l'hydrate d'hydrazine et régénérer la méthyl éthyl cétone, tout en effectuant une purge de l'oxime de la méthyl éthyl cétone ;
(g) éventuellement on recycle à l'étape (a) la méthyl éthyl cétone obtenue à l'étape (f) ;
(h) on recycle la purge de l'oxime de la méthyl éthyl cétone obtenue à l'étape (f) à l'une au moins des étapes (a), (b), (c), (d) ou (g).

3. Procédé selon la revendication 2, dans lequel on recycle la purge d'oxime de la méthyl éthyl cétone obtenue à l'étape (f) à l'une au moins des étapes (c), (d) ou (g).

4. Procédé selon la revendication 2, dans lequel on recycle la purge d'oxime de la méthyl éthyl cétone obtenue à l'étape (f) à l'étape (d) de lavage de la phase organique.

5. Procédé selon la revendication 4, dans lequel la purge d'oxime de la méthyl éthyl cétone est suffisante pour effectuer ledit lavage de la phase organique, sans ajout d'eau.

6. Procédé selon l'une quelconque des revendications précédentes, dans lequel la purge de l'oxime de la méthyl éthyl cétone est réalisée par soutirage, de préférence par un soutirage latéral en continu.

7. Procédé selon l'une quelconque des revendications précédentes, dans lequel l'étape (h) de recyclage est réalisée en continu.

8. Procédé selon l'une quelconque des revendications précédentes, dans lequel l'étape (f) d'hydrolyse de l'azine et de régénération de la méthyl éthyl cétone est effectuée dans une colonne de distillation à garnissage ou à plateaux, de préférence fonctionnant sous une pression de 2 à 25 bars et avec une température de pied de 150 °C à 200 °C.

9. Procédé selon la revendication 8, dans lequel la teneur en oxime de la méthyl éthyl cétone est inférieure ou égale à 20 % en poids, de préférence entre 5% et 13% en poids par rapport au poids total de la phase liquide présente sur les plateaux ou dans les parties de la colonne où sa concentration est à son maximum.

10. Procédé selon l'une quelconque des revendications précédentes, dans lequel ledit activateur est l'acétamide.

## Patentansprüche

1. Verfahren zur Herstellung von Hydrazinhydrat, das die folgenden Schritte umfasst:
- das Umsetzen von Ammoniak, Wasserstoffperoxid und Methylethylketon in Gegenwart einer mindestens einen Aktivator umfassenden Lösung, wodurch ein Azin gebildet wird;
- das Hydrolysieren des gebildeten Methylethylketonazins, wodurch Hydrazinhydrat erhalten wird, wobei das Methylethylketonoxim beim Hydrolyseschritt abgeführt wird;
wobei das Verfahren **dadurch gekennzeichnet ist, dass** das abgeführte Methylethylketonoxim stromaufwärts vom Hydrolyseschritt zurückgeführt wird.

2. Verfahren zur Herstellung von Hydrazinhydrat nach Anspruch 1, das die folgenden Schritte umfasst:
(a) das Umsetzen von Ammoniak, Wasserstoffperoxid und Methylethylketon in Gegenwart einer mindestens einen Aktivator umfassenden Lösung, wodurch ein Azin gebildet wird;
(b) das Abtrennen von der Reaktionsmischung aus Schritt (a):
- der den (die) Aktivator(en) enthaltenden wässrigen Phase und
- der organischen Phase, die das gebildete Methylethylketonazin und -oxim und gegebenenfalls nicht umgesetztes Methylethylketon umfasst;
(c) gegebenenfalls das Zurückführen der wässrigen Phase nach einer etwaigen Behandlung in Schritt (a);
(d) das Waschen, vorzugsweise im Gegenstrom, der organischen Phase;
(e) gegebenenfalls das Destillieren der gewaschenen organischen Phase so, dass das Azin zurückgewonnen wird;
(f) das Hydrolysieren des Azins, wodurch Hydrazinhydrat erhalten wird, und das Regenerieren von Methylethylketon, wobei das Methylethylketonoxim abgeführt wird;
(g) gegebenenfalls das Zurückführen des in Schritt (f) erhaltenen Methylethylketons in Schritt (a);
(h) das Zurückführen des in Schritt (f) erhaltenen abgeführten Methylethylketonoxims in mindestens einen der Schritte (a), (b), (c), (d) oder (g).

3. Verfahren nach Anspruch 2, wobei das in Schritt (f) erhaltene abgeführte Methylethylketonoxim in mindestens einen der Schritte (c), (d) oder (g) zurückgeführt wird.

4. Verfahren nach Anspruch 2, wobei das in Schritt (f) erhaltene abgeführte Methylethylketonoxim in Schritt (d) des Waschens der organischen Phase zurückgeführt wird.

5. Verfahren nach Anspruch 4, wobei die Methylethylketonoxim-Abführung ausreichend ist, um das Waschen der organischen Phase zu bewirken, ohne dass Wasser zugegeben wird.

6. Verfahren nach einem der vorhergehenden Ansprüche, wobei die Methylethylketonoxim-Abführung durch eine Entnahme, vorzugsweise mittels eines kontinuierlichen Nebenstroms, erfolgt.

7. Verfahren nach einem der vorhergehenden Ansprüche, wobei der Rückführungsschritt (h) kontinuierlich erfolgt.

8. Verfahren nach einem der vorhergehenden Ansprüche, wobei der Schritt (f) zur Hydrolyse des Azins und zur Regeneration des Methylethylketons in einer Füllkörper- oder Boden-Destillationskolonne erfolgt, die vorzugsweise unter einem Druck von 2 bis 25 bar und mit einer Sumpftemperatur von 150 °C bis 200 °C betrieben wird.

9. Verfahren nach Anspruch 8, wobei der Gehalt des Methylethylketonoxims weniger als oder gleich 20 Gew.-% ist, vorzugsweise zwischen 5 Gew.-% und 13 Gew.-% beträgt, bezogen auf das Gesamtgewicht der flüssigen Phase, die auf den Böden oder in den Teilen der Kolonne vorhanden ist, wo seine Konzentration am höchsten ist.

10. Verfahren nach einem der vorhergehenden Ansprüche, wobei es sich beim Aktivator um Acetamid handelt.

## Claims

1. Process for preparing hydrazine hydrate, comprising the following steps:
- reacting ammonia, hydrogen peroxide and methyl ethyl ketone in the presence of a solution comprising at least one activator to form an azine;
- hydrolyzing the resulting azine of methyl ethyl ketone to give hydrazine hydrate, with the oxime of methyl ethyl ketone being purged during said hydrolysis step;
said process being **characterized in that** said methyl ethyl ketone oxime purge is recycled upstream of the hydrolysis step.

2. Process for preparing hydrazine hydrate according to Claim 1, comprising the following steps:
(a) reacting ammonia, hydrogen peroxide and methyl ethyl ketone in the presence of a solution comprising at least one activator to form an azine;
(b) treating the reaction mixture from step (a) to isolate:
- the aqueous phase comprising the activator(s); and
- the organic phase comprising the resulting azine and oxime of methyl ethyl ketone and optionally the unreacted methyl ethyl ketone;
(c) optionally recycling the aqueous phase to step (a) after optional treatment;
(d) washing the organic phase, preferably in countercurrent;
(e) optionally distilling the washed organic phase to recover the azine;
(f) hydrolyzing the azine to give hydrazine hydrate and regenerate methyl ethyl ketone, with the oxime of methyl ethyl ketone being purged;
(g) optionally recycling the methyl ethyl ketone obtained in step (f) to step (a);
(h) recycling the methyl ethyl ketone oxime purge obtained in step (f) to one at least of steps (a), (b), (c), (d) or (g).

3. Process according to Claim 2, wherein the methyl ethyl ketone oxime purge obtained in step (f) is recycled to one at least of steps (c), (d) or (g).

4. Process according to Claim 2, wherein the methyl ethyl ketone oxime purge obtained in step (f) is recycled to the organic phase washing step (d).

5. Process according to Claim 4, wherein the methyl ethyl ketone oxime purge is sufficient to perform said organic phase washing, without addition of water.

6. Process according to any one of the preceding claims, wherein the methyl ethyl ketone oxime purge is carried out by withdrawal, preferably by a continuous side takeoff.

7. Process according to any one of the preceding claims, in which the recycling step (h) is carried out continuously.

8. Process according to any one of the preceding claims, in which the azine hydrolysis and methyl ethyl ketone regeneration step (f) is performed in a packed or tray distillation column, preferably operating at a pressure of 2 to 25 bar and with a bottom temperature of 150°C to 200°C.

9. Process according to Claim 8, wherein the amount of methyl ethyl ketone oxime is less than or equal to 20% by weight, preferably between 5% and 13% by weight relative to the total weight of the liquid phase on the trays or in the parts of the column at which its concentration is at its maximum.

10. Process according to any one of the preceding claims, in which said activator is acetamide.
